# FASCICULE DE BREVET EUROPEEN

(11) **EP 3 186 132 B1**
(45) Date de publication et mention de la délivrance du brevet: **03.10.2018**
(21) Numéro de dépôt: 15759505.9
(22) Date de dépôt: 10.07.2015
(51) Int. Cl.: B62D 25/08, B62D 27/02, B62D 29/00

(54) **ASSEMBLAGE D'INSERTS DE RENFORT PAR UN MATÉRIAU POLYMÈRE, NOTAMMENT POUR FACE AVANT TECHNIQUE DE VÉHICULE, CET ASSEMBLAGE ÉTANT RENFORCE PAR SA FIXATION A UN ÉLÉMENT DE STRUCTURE**
ANORDNUNG AUS BEWEHRUNGSEINSÄTZEN MITTELS EINES POLYMERMATERIALS, INSBESONDERE FÜR EINE TECHNISCHE FRONTSEITE EINES FAHRZEUGS, BESAGTE ANORDNUNG MIT VERSTÄRKUNG DURCH DIE BEFESTIGUNG DAVON AN EINEM STRUKTURELEMENT
ASSEMBLY OF REINFORCEMENT INSERTS BY MEANS OF A POLYMER MATERIAL, IN PARTICULAR FOR A TECHNICAL FRONT FACE OF A VEHICLE, SAID ASSEMBLY BEING REINFORCED BY THE ATTACHMENT OF SAME TO A STRUCTURAL ELEMENT

(30) Priorité: 28.08.2014 FR 1458073
(43) Date de publication de la demande: 05.07.2017
(73) Titulaire: Renault S.A.S., 92100 Boulogne-Billancourt (FR)
(72) Inventeur: AESCHLIMANN, Jean-louis, F-78390 Bois d'Arcy (FR); FLANDIN, Michael, F-28410 Broue (FR)
(86) Numéro de dépôt international: PCT/FR2015/051911
(87) Numéro de publication internationale: WO 2016/030589

(56) Documents cités:
- EP-A1- 1 547 909
- EP-A1- 1 607 311
- EP-A1- 1 607 312
- WO-A1-2005/016724
- US-A1- 2004 105 949

## Description

L'invention concerne un assemblage d'inserts de renfort par un matériau polymère. En particulier, les inserts de renfort sont assemblés uniquement par le matériau polymère les recouvrant au moins partiellement. En particulier, l'assemblage des inserts de renfort est renforcé par sa fixation sur un élément de structure distinct.

Plus particulièrement, l'assemblage selon l'invention fait partie d'une face avant technique de véhicule automobile, notamment de la partie inférieure de celle-ci.

On appelle dans le métier « face avant technique » (FAT) une structure qui se trouve en avant du bloc moteur et qui a pour fonction de supporter différents organes, principalement le radiateur du bloc moteur. La FAT peut prendre de multiples formes. Dans certains cas, elle se réduit à une simple poutre transversale. Dans d'autres cas, elle constitue un châssis de forme plus ou moins complexe intégrant une « valise de refroidissement ». Par ce terme, on désigne l'ensemble des éléments nécessaires au refroidissement du moteur, parfois empilés en couches ou en partie superposés. La valise de refroidissement se compose classiquement du radiateur à eau de refroidissement moteur, éventuellement de l'échangeur air-air (Refroidisseur Air Suralimentation- RAS) et du condenseur. La FAT intègre en outre différentes fonctions telles que support de butées de capot, support de serrure de capot ou d'un jambage supportant la serrure de capot, etc.

Pour un gain en compacité et en masse, certaines FAT forment un cadre obtenu par assemblage de deux traverses par des montants verticaux, ce cadre comprenant des inserts de renfort recouverts au moins partiellement de matériau polymère.

Pour assurer la rigidité d'un tel cadre, il s'avère nécessaire d'assembler les inserts de renfort entre eux. Cette fixation peut être réalisée avant de recouvrir les inserts d'un matériau polymère, par exemple par soudage, vissage ou rivetage, ou après, généralement par vissage ou rivetage. Ces opérations de fixation nécessitent cependant des opérations de positionnement et de fixation qui complexifient le procédé d'assemblage et augmentent les coûts d'assemblage.

Certaines solutions consistent à créer une zone en forme de T de recouvrement et d'encastrement des inserts avant de les recouvrir de matériau polymère. Cette solution permet d'obtenir un assemblage robuste sans opération de soudage, vissage ou rivetage, mais résulte en un assemblage volumineux et lourd.

D'autres solutions consistent à réaliser une structure en deux parties distinctes inférieure et supérieure, chaque partie comprenant des portions de montants verticaux. Un tel assemblage est cependant volumineux et les deux parties ne sont pas reliées entre elles.

Une autre solution consiste enfin à positionner les inserts de sorte qu'ils ne se touchent pas et à les enrober de matériaux polymère. La tenue mécanique de cet assemblage résulte alors uniquement du matériau polymère reliant les inserts et est relativement limitée.

Le document US 20040105949 A1, représentatif de l'art antérieur, divulgue un assemblage d'un premier et d'un deuxième insert de renfort longitudinal par un matériau polymère comme mentionné dans le préambule de la revendication 1.

Il existe donc un besoin pour un assemblage robuste et léger, qui peut être réalisé de manière simple et peu coûteuse.

L'invention vise à pallier ces inconvénients en proposant un assemblage d'un premier insert de renfort longitudinal et d'un deuxième insert de renfort longitudinal par un matériau polymère les recouvrant au moins partiellement, chaque insert de renfort présentant une section transversale ouverte concave, notamment sensiblement en forme de U ou Ω, les directions longitudinales desdits inserts de renfort étant sensiblement perpendiculaires, caractérisé en ce que :
- un bord d'une extrémité du premier insert de renfort est en appui, notamment en appui direct, contre le deuxième insert de renfort du côté convexe de celui-ci, le long d'une partie d'un bord d'une ouverture traversant ledit deuxième insert de renfort, ladite ouverture étant de forme et dimension identiques ou sensiblement identiques aux forme et dimension de la section transversale de ladite extrémité du premier insert de renfort,
- un matériau polymère recouvre au moins partiellement lesdits inserts de renfort au moins au niveau de leur jonction,
- une patte de fixation solidaire dudit deuxième insert de renfort et adjacente à ladite ouverture est en appui contre une paroi de ladite extrémité du premier insert de renfort, ladite paroi et ladite patte de fixation étant percées d'orifices disposés en regard les uns des autres.

Les deux inserts de renfort sont ainsi maintenus en contact direct l'un contre l'autre au moyen du matériau polymère, la fixation ultérieure de l'assemblage à un autre élément de structure, via les trous de fixation, permettant de renforcer la liaison entre les inserts de renfort. Ainsi, avec une zone de recouvrement très faible, de la surface de la patte de fixation, on obtient un assemblage qui, en utilisation, s'avère robuste, léger et peu encombrant.

Les inserts de renfort peuvent être métalliques ou en matériau polymère. Les inserts de renfort peuvent par exemple être en aluminium, en alliage à base d'aluminium ou en acier, notamment en acier inoxydable. Ils peuvent également être en polypropylène ou polyamide, éventuellement renforcé, par exemple par des fibres de verre, des fibres de carbone ou autres, ou tout autre matériau polymère présentant la rigidité recherchée.

Le matériau polymère enrobant les inserts de renfort peut également être du polypropylène ou un polyamide.

Avantageusement, les inserts de renfort peuvent être formés de parois planes, ou sensiblement planes, reliées les unes aux autres suivant un bord longitudinal. Ceci permet de réaliser facilement des inserts robustes. Ainsi, un insert de renfort sensiblement en forme de U peut être formé de trois parois planes, ou sensiblement planes, reliées deux à deux, de préférence à angle droit ou sensiblement à angle droit. Un insert de renfort sensiblement en forme de Ω peut être formé de trois parois planes, ou sensiblement planes, reliées deux à deux, de préférence à angle droit ou sensiblement à angle droit, les deux parois d'extrémité comprenant sur un bord longitudinal libre, un rebord longitudinal perpendiculaire, ou sensiblement perpendiculaire, à la paroi dont il est solidaire.

L'ouverture peut présenter une forme de quadrilatère, par exemple de rectangle, mais d'autres formes peuvent être envisageables.

Avantageusement et de manière non limitative, la patte de fixation peut être venue de matière avec le deuxième insert de renfort, lequel peut être métallique ou en matériau polymère, permettant ainsi de simplifier la réalisation de cette patte de fixation. Notamment, le deuxième insert de renfort étant métallique, la patte de fixation peut être une partie découpée du deuxième insert de renfort pour former ladite ouverture. Ceci peut également permettre de simplifier la réalisation de la patte de fixation.

Alternativement, la patte de fixation peut être fixée au deuxième insert de renfort par vissage, soudage, rivetage ou collage.

L'assemblage selon l'invention peut en outre présenter une ou plusieurs des caractéristiques suivantes :
- La patte de de fixation peut être en appui contre ladite paroi, du côté convexe du premier insert de renfort. Un élément de structure peut alors avantageusement être fixé au premier insert de renfort du côté de la concavité de ce dernier, permettant ainsi de renforcer l'assemblage par une prise en sandwich du premier insert de renfort.
- Le matériau polymère recouvrant au moins partiellement lesdits inserts de renfort ne recouvre pas lesdits orifices. Ceci permet de simplifier une étape ultérieure de fixation de l'assemblage à un élément de structure.
- Le matériau polymère recouvrant au moins partiellement lesdits inserts de renfort forme une nervure de rigidification s'étendant dans le prolongement du premier insert au travers de l'ouverture et au-delà de celle-ci, à l'intérieur de la concavité du deuxième insert de renfort. Ceci permet d'éviter une rupture d'inertie entre les deux inserts de renfort au niveau de leur jonction, et par conséquent apporte une plus grande robustesse à l'assemblage.
- Le matériau polymère forme au moins une nervure de rigidification s'étendant depuis une partie du bord de l'ouverture le long de laquelle le premier insert de renfort est en appui, dans le prolongement du premier insert de renfort, notamment dans la continuité d'une couche de polymère recouvrant le premier insert de renfort à proximité de sa jonction avec le deuxième insert de renfort, au travers de l'ouverture et au-delà de celle-ci. Ceci peut permettre d'améliorer la robustesse de l'assemblage en réduisant les ruptures d'inertie. Notamment, les nervures peuvent s'étendre sur toute la hauteur de la concavité définie par le deuxième insert de renfort.
- Une ou plusieurs nervures de rigidification peuvent également s'étendre parallèlement ou sensiblement parallèlement à la direction longitudinale du premier insert de renfort, à l'intérieur de la concavité définie par le deuxième insert de renfort, en regard de ladite ouverture, notamment d'un bord à l'autre de l'ouverture. Ceci peut également permettre d'améliorer la tenue de l'assemblage au niveau de la jonction des inserts de renfort, notamment en réduisant les risques de déformation du deuxième insert de renfort au niveau de la jonction.

En outre, d'autres nervures de rigidification entrecroisées peuvent être prévues à l'intérieur de la concavité du deuxième insert, autour de l'ouverture, voir sur les faces convexes et concaves du premier insert, pourvu que ces nervures ne recouvrent pas les orifices de la patte de fixation ou de la paroi ou n'empêchent pas d'y accéder.

L'invention concerne aussi une face avant technique de véhicule automobile comprenant au moins un assemblage selon l'invention, dans laquelle le deuxième insert de renfort forme une traverse horizontale, notamment inférieure et le premier insert de renfort forme un montant vertical. Notamment, un autre premier insert de renfort peut former un deuxième montant vertical de la FAT, solidarisé au même deuxième insert de renfort, que le premier insert de renfort. Le deuxième insert de renfort présente alors une deuxième ouverture similaire à l'ouverture précédemment décrite, pour l'assemblage de l'autre premier insert de renfort. En variante, la FAT pourrait comprendre une autre traverse horizontale, notamment supérieure, solidarisée de la même manière aux deux premiers inserts de renfort verticaux.

L'invention concerne également une structure de support comprenant un assemblage selon l'invention, faisant par exemple partie d'une FAT, solidaire d'un élément de structure, dans lequel ledit élément de structure est fixé audit assemblage par des vis ou rivets traversant les orifices de cet assemblage, l'élément de structure étant notamment fixé à l'assemblage du côté opposé à la patte de fixation de celui-ci. La fixation de l'élément de structure à l'assemblage permet ainsi de rigidifier la zone de jonction des premier et deuxième inserts de renfort, de sorte que l'assemblage selon l'invention est particulièrement robuste en utilisation.

L'élément de structure peut notamment être fixé à l'assemblage du côté opposé à la patte de fixation, de sorte que le premier insert de renfort est pris en sandwich entre la patte de fixation du deuxième insert de renfort et l'élément de structure, ce qui peut améliorer la robustesse de l'assemblage.

L'invention concerne également un procédé de fabrication d'un assemblage selon l'invention, cet assemblage comprenant au moins un premier insert de renfort longitudinal et au moins un deuxième insert de renfort longitudinal, chaque insert de renfort présentant une section transversale ouverte concave, notamment sensiblement en forme de U ou Ω, ledit procédé comprenant :
(i) une étape de positionnement desdits inserts de renfort dans un moule, dans laquelle les inserts de renfort sont disposés de sorte que leurs directions longitudinales soient sensiblement perpendiculaires, et au cours de laquelle :
   (a) un bord d'une extrémité du premier insert de renfort est appliqué contre le deuxième insert de renfort, notamment directement contre le deuxième insert de renfort, du côté convexe de celui-ci, le long d'une partie d'un bord d'une ouverture traversant ledit deuxième insert de renfort, ladite ouverture étant de forme et dimension identiques ou sensiblement identiques aux forme et dimension de la section transversale du premier insert de renfort, et
   (b) une patte de fixation solidaire dudit deuxième insert de renfort et adjacente à ladite ouverture est appliquée contre une paroi de ladite extrémité du premier insert de renfort, de sorte que des orifices traversant ladite paroi et ladite patte de fixation soient disposés en regard les uns des autres,
(ii) une étape d'injection d'un matériau polymère à l'intérieur du moule, au cours de laquelle un matériau polymère recouvre au moins partiellement lesdits inserts de renfort au moins au niveau de leur jonction.

L'assemblage selon l'invention est ainsi particulièrement simple à réaliser, l'étape d'injection permettant de réaliser à la fois l'injection de matériau polymère et l'assemblage des inserts de renfort, sans nécessité d'étapes préalables ou ultérieures distinctes d'assemblage des inserts de renfort.

Avantageusement, au cours de la première étape (i), les inserts de renfort peuvent être disposés dans une première partie de moule suivant une première direction perpendiculaire aux directions longitudinales des premier et deuxième inserts de renfort, puis une deuxième partie de moule est appliquée contre la première partie de moule suivant ladite première direction et une troisième partie de moule est appliquée du côté concave du deuxième insert de renfort contre les première et deuxième parties de moule suivant une deuxième direction parallèle à la direction longitudinale du premier insert de renfort, ladite troisième partie de moule comportant une partie traversant l'ouverture du deuxième insert de renfort.
- après l'étape d'injection (ii), les première et deuxième parties de moule sont séparées par un mouvement d'écartement parallèle à ladite première direction et la troisième partie de moule est ôtée par un mouvement d'écartement parallèle à ladite deuxième direction.

L'assemblage selon l'invention peut ainsi être réalisé de manière simple, par des mouvements de moule simples à mettre en oeuvre.

L'invention est maintenant décrite en référence aux dessins annexés, non limitatifs, dans lesquels :
- la figure 1 représente une vue en perspective partielle des inserts de renfort d'un assemblage selon un mode de réalisation de l'invention, avant leur positionnement relatif ;
- la figure 2 représente une vue en perspective partielle des inserts de renfort représentés figure 1 prêts à être recouverts partiellement de matériau polymère ;
- la figure 3 représente une vue en perspective partielle d'un assemblage formé avec les inserts représentés figures 1 et 2 ;
- la figure 4 représente une section de l'assemblage suivant la ligne A-A de la figure 3. Sur cette figure, les traits tiretés représentent les différentes parties d'un moule permettant de réaliser l'assemblage ;
- la figure 5 représente un assemblage selon un mode de réalisation de l'invention en cours de fixation à un élément de structure.

Sur les figures, les mêmes éléments sont désignés par les mêmes références.

Dans la présente description, les termes avant, arrière, supérieur, inférieur, font référence aux directions avant et arrière du véhicule, lorsque l'assemblage est monté sur un véhicule. Les axes X, Y, Z, correspondent respectivement à l'axe longitudinal (d'avant en arrière), transversal et vertical du véhicule.

Par sensiblement horizontal, longitudinal ou vertical, on entend une direction/un plan formant un angle d'au plus ±20°, voire d'au plus 10° ou d'au plus 5°, avec une direction/un plan horizontal, longitudinal ou vertical.

Par sensiblement parallèle, perpendiculaire ou à angle droit, on entend une direction/un angle s'écartant d'au plus ±20°, voire d'au plus 10° ou d'au plus 5° d'une direction parallèle, perpendiculaire ou d'un angle droit.

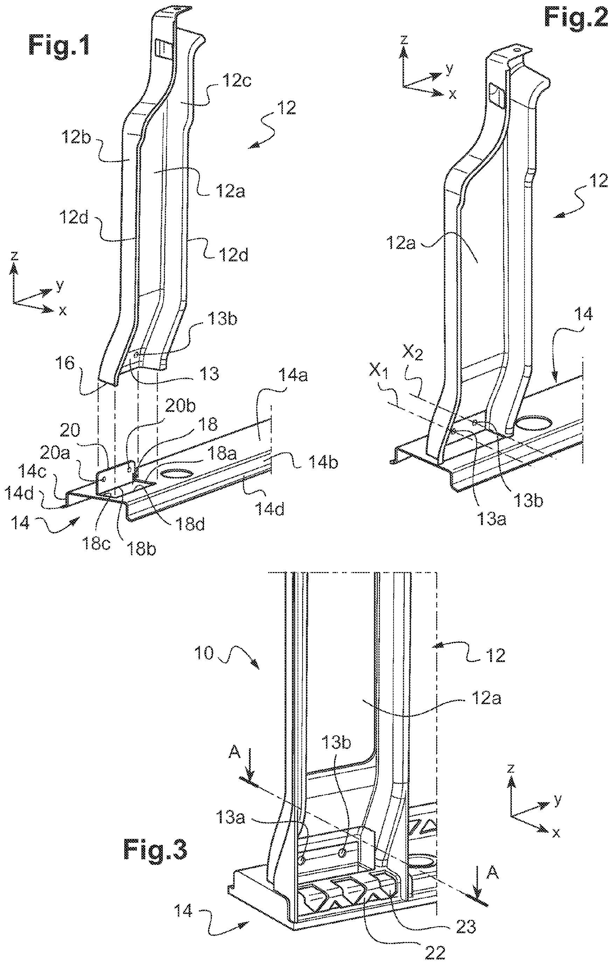

La figure 1 représente un premier insert renfort de longitudinal 12 s'étendant verticalement et un deuxième insert de renfort longitudinal 14 s'étendant horizontalement. Tel que représenté sur cette figure, les directions longitudinales de ces inserts de renfort, 12, 14, sont perpendiculaires. Les premier et deuxième inserts de renfort 12, 14, vont permettre de réaliser un assemblage 10 selon un mode de réalisation de l'invention, tel que décrit ci-après.

Dans le mode de réalisation représenté sur les figures 1 à 4, un bord 16 d'une extrémité du premier insert 12 est appliqué contre le deuxième insert de renfort 14, du côté convexe de celui-ci, le long d'une partie d'un bord d'une ouverture 18 traversant ce deuxième insert de renfort 14.

Chaque insert de renfort 12, 14, présente une section transversale ouverte concave. Ici, il s'agit d'une forme sensiblement en Ω, formé par des parois planes. Autrement dit, l'insert de renfort est formé de plusieurs parois planes reliées les unes aux autres par un bord longitudinal, de section transversale similaire à un Ω.

Ainsi, le premier insert 12 comprend une paroi de fond 12a et deux parois latérales 12b, 12c, de part et d'autre de la paroi de fond 12a. Chacune de ces parois latérales 12b, 12d, présente un rebord 12d s'étendant parallèlement à la paroi de fond 12a, à l'extérieur de l'insert. De manière similaire, le deuxième insert 14 comprend une paroi de fond plane 14a encadrée par deux parois latérales 14b, 14c, chacune de ces parois latérales 14b et 14c présentant un rebord 14d dirigé vers l'extérieur de l'insert.

Dans l'exemple représenté, la paroi de fond 12a du premier insert de renfort 12 s'étend perpendiculairement à la paroi de fond 14a du deuxième insert de renfort 14, et parallèlement à la direction longitudinale du deuxième insert de renfort 14. Cet agencement permet de réduire l'encombrement de l'assemblage des premier et deuxième inserts de renfort.

Le deuxième insert de renfort 14 présente en outre une ouverture 18 de forme et dimension identiques aux formes et dimensions de la section transversale du premier insert de renfort 12. Cette ouverture 18 présente ici une forme rectangulaire correspondant sensiblement à la section des parois de fond et latérales 12a, 12b, 12c du premier insert de renfort 12.

Ainsi, le bord 16 du premier insert de renfort 12 peut être appliqué (directement) contre une partie du bord de l'ouverture 18, à savoir ici trois des bords 18a, 18b, 18c de l'ouverture rectangulaire 18.

Ceci est représenté à la figure 2 sur laquelle on peut voir que le bord 16 du premier insert 12 est appliqué contre les bords 18a 18b, 18c de l'ouverture 18, le quatrième bord 18d de l'ouverture restant libre.

Tel que représenté sur la figure 3, l'assemblage 10, comprenant le premier insert de renfort 12 et le deuxième insert de renfort 14 est recouvert partiellement d'un matériau polymère. Ce matériau polymère permet notamment d'augmenter la rigidité des inserts de renfort 12 et 14, mais également assure l'assemblage de ces inserts.

Afin d'augmenter la robustesse de l'assemblage des premier et deuxième inserts de renfort 12 et 14, le deuxième insert de renfort 14 présente une patte de fixation 20, à laquelle il est solidaire, cette patte de fixation 20 étant adjacente à l'ouverture 18.Cette patte de fixation est conformée de manière à être en appui contre une paroi 13 d'extrémité du premier insert de renfort 12 lorsque le bord 16 de celui-ci est en appui sur les bords de l'ouverture 18. Ici, cette paroi 13 est formée par une partie de la paroi de fond 12a du premier insert de renfort. La paroi 13 et la patte de fixation 20 sont chacune percées d'orifices traversant 13a, 13b, respectivement 20a, 20b disposés en regard les uns des autres.

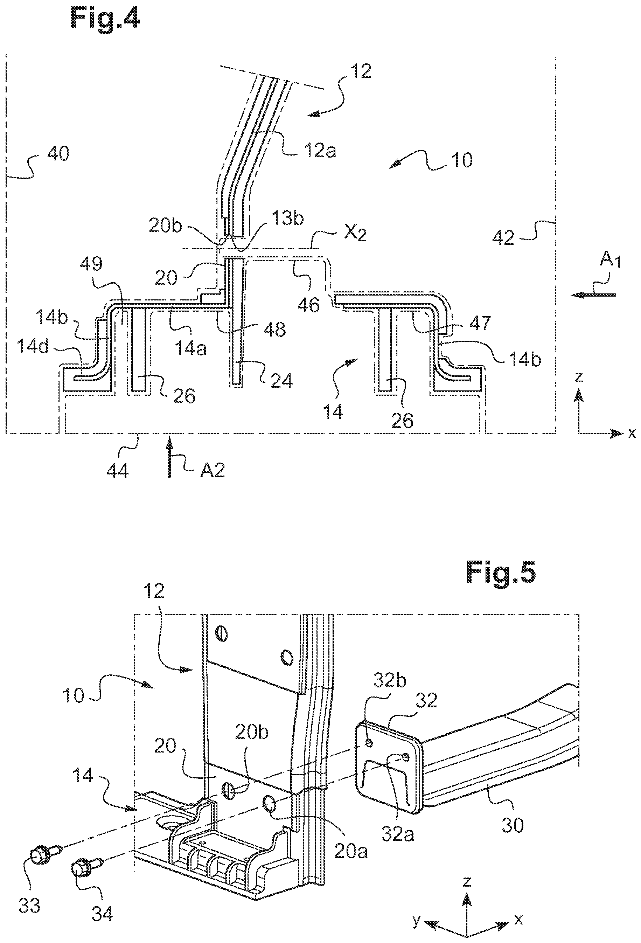

Les axes de ces orifices 13a, 13b, 20a, 20b sont représentés sur la figure 2 et désignés par les références X1 et X2 respectivement. Ainsi, lorsque le premier insert de renfort 12 et le deuxième insert de renfort 14 sont en appui direct l'un contre l'autre tel que représenté sur la figure 2 les orifices 20a, 20b coïncident avec les orifices 13a, 13b respectivement. Lors du surmoulage du matériau polymère tel que représenté sur les figures 3 et 4, ces orifices 13a, 13b, 20a et 20b sont de préférence non recouverts par le matériau polymère tel que visible sur les figures, facilitant l'utilisation ultérieure de ces orifices pour la fixation de l'assemblage 10 à un élément de structure. Ce matériau polymère peut s'étendre de part et d'autre du premier insert de renfort 12 et de ses orifices 20a, 20b.

Tel que visible sur la figure 3, le deuxième insert de renfort 14 est partiellement recouvert de matériau polymère sur ses faces externes, autrement dit, sur ses faces convexes. Notamment sur la figure 3, la référence 22 désigne une bande de polymère épousant la surface externe du deuxième insert de renfort 14 avec des ajours 23 permettant de réduire la quantité de matière utilisée. Cette forme maillée présente l'avantage d'apporter une bonne tenue mécanique tout en réduisant la quantité de matière utilisée.

Le matériau polymère recouvrant partiellement les inserts de renfort au moins au niveau de leur jonction forme également une nervure de rigidification 24 s'étendant dans le prolongement du premier insert de renfort 12, au travers de l'ouverture 18, et à l'intérieur de la concavité du deuxième insert de renfort 14, tel que visible plus particulièrement sur la figure 4. La nervure de rigidification 24 s'étend de préférence sur toute la hauteur de la concavité définie par le deuxième insert de renfort 14 (mesurée suivant la direction longitudinale du premier insert de renfort 12). Cette nervure de rigidification 24 s'étend dans la continuité d'une couche de polymère recouvrant le premier insert de renfort 12 et permet d'assurer une continuité du premier insert de renfort 12 sur toute l'épaisseur du deuxième insert de renfort 14, améliorant l'inertie de la jonction.

D'autres nervures de rigidification peuvent être réalisées dans le matériau polymère afin de rigidifier l'assemblage 10. De préférence, ces nervures de rigidification présentent une épaisseur sensiblement constante, semblable à l'épaisseur de la couche de matériau polymère recouvrant les inserts.

Des nervures de rigidification 26 entrecroisées peuvent ainsi être prévues à l'intérieur de la concavité définie par le deuxième insert de renfort 14, depuis sa paroi de fond 14a, perpendiculaires à celle-ci.

Une ou plusieurs autres nervures de rigidification (non représentées) peuvent également s'étendre en regard de l'ouverture, perpendiculairement à des bords de celles-ci à l'intérieur de la concavité définie par le deuxième insert de renfort 14, notamment sur toute sa hauteur. De telles nervures s'étendent avantageusement perpendiculairement à la paroi de fond du deuxième insert de renfort 14. D'autres nervures (non représentées), éventuellement reliées entre elle, peuvent également s'étendre depuis chacun des bords 18a-d de l'ouverture 18 vers l'intérieur de la concavité définie par le deuxième insert de renfort 14, de préférence sur toute la hauteur de celle-ci.

Les différents agencements de nervures décrits ci-dessus peuvent être combinés les uns aux autres.

L'assemblage 10 représenté sur les figures 3 et 4 est destiné à être fixé à un élément de structure 30, par exemple un longeron, tel que représenté sur la figure 5. Ce longeron 30 présente une plaque d'extrémité 32 percée de deux orifices 32a et 32b, de même écartement que les orifices 20a, 20b ou 13a, 13b de l'assemblage 10. L'élément de structure 30 peut alors être fixé à l'assemblage 10 par insertion de vis 33 et 34 au travers des orifices 20a, 20b, 13a, 13b ; 32a, 32b de l'assemblage 10 d'une part et du longeron 30 d'autre part. On obtient ainsi un assemblage particulièrement robuste entre l'élément de structure et l'assemblage de l'invention tout en améliorant la rigidité de ce dernier.

Le surmoulage du matériau polymère sur les inserts de renfort est de préférence réalisé par injection dans un moule réalisé en plusieurs parties. Les parties de moule sont représentées en traits tiretés sur la figure 4.

Une première partie de moule 40, également appelée matrice, reçoit les inserts de renfort 12, 14 suivant une première direction A1 perpendiculaire aux directions longitudinales des premier et deuxième inserts de renfort 12, 14. Cette première partie de moule 40 est partiellement refermée par une deuxième partie de moule 42, également appelée poinçon, qui vient s'emboîter sur la première partie de moule 40 suivant cette direction A1. Une troisième partie de moule 44, également appelée tiroir ou sabot, vient fermer les première et deuxième partie de moule 40, 42 suivant une deuxième direction A2 perpendiculaire à la direction longitudinale du deuxième insert 14 et parallèlement à la direction longitudinale du premier insert 12. Cette troisième partie de moule vient refermer les première et deuxième parties de moule du côté de la face concave du deuxième insert de renfort 14. La troisième partie de moule 44 comporte une partie 46 traversant l'ouverture 18 du premier insert de manière à pouvoir former la nervure 24. Cette troisième partie de moule 44 comprend d'autres parties saillantes 47, 48, 49 permettant de réaliser des nervures de rigidification 26 du côté de la concavité du deuxième insert de renfort 14. Une fois le moule fermé, le matériau polymère peut être injecté à l'intérieur de manière à recouvrir les premier et deuxième inserts de renfort aux endroits initialement prévus A l'issue de l'étape d'injection, les parties de moules 40, 42 et 44 sont séparées par écartement parallèlement à la première direction A1 pour les parties de moule 40, 42 et parallèlement à la deuxième direction A2 pour la partie de moule 44.

On obtient ainsi de manière simple et rapide un assemblage 10 robuste, sans étape de pré-assemblage des inserts de renfort 12 et 14 dans la mesure où le positionnement des premier et deuxième inserts de renfort 12, 14 à l'intérieur du moule permet de maintenir ceux-ci dans la position représentée sur la figure 2 avant l'injection du matériau polymère.

Sur les figures, le deuxième insert de renfort 14 forme par exemple une traverse inférieure de FAT de véhicule automobile. Dans ce cas, tel que représenté, l'ouverture 18 peut être disposée à une première extrémité du deuxième insert de renfort 14 pour sa fixation au premier insert de renfort 12 formant un montant de la FAT. Ce deuxième insert de renfort 14 comprend une autre ouverture 18 à son autre extrémité, contre laquelle est en appui un autre montant similaire au premier insert de renfort 12 représenté et fixé de la même manière. Les parties supérieures des montants sont alors fixées à une traverse supérieure de la FAT (non représentée) par un assemblage similaire ou par tout autre assemblage.

## Revendications

1. Assemblage (10) d'un premier insert de renfort longitudinal (12) et d'un deuxième insert de renfort longitudinal (14) par un matériau polymère les recouvrant au moins partiellement, chaque insert de renfort (10, 12) présentant une section transversale ouverte concave, notamment sensiblement en forme de U ou Ω, les directions longitudinales desdits inserts de renfort (12, 14) étant sensiblement perpendiculaires, **caractérisé en ce que** :
- un bord (16) d'une extrémité du premier insert de renfort (12) est en appui contre le deuxième insert de renfort (14) du côté convexe de celui-ci, le long d'une partie (18a-c) d'un bord d'une ouverture (18) traversant ledit deuxième insert de renfort (14), ladite ouverture (18) étant de forme et dimension identiques ou sensiblement identiques aux forme et dimension de la section transversale de ladite extrémité du premier insert de renfort (12),
- un matériau polymère recouvre au moins partiellement lesdits inserts de renfort (12, 14) au moins au niveau de leur jonction,
- une patte de fixation (20) solidaire dudit deuxième insert de renfort (14) et adjacente à ladite ouverture (18) est en appui contre une paroi (13) de ladite extrémité du premier insert de renfort (12), ladite paroi (13) et ladite patte de fixation (20) étant percées d'orifices (13a, 13b ; 20a, 20b) disposés en regard les uns des autres.

2. Assemblage (10) selon la revendication 1, **caractérisé en ce que** ladite patte de fixation (20) est venue de matière avec ledit deuxième insert de renfort (14) ou fixée au deuxième insert de renfort (14) par vissage, soudage, rivetage ou collage.

3. Assemblage (10) selon la revendication 1 ou 2, **caractérisé en ce que**, le deuxième insert de renfort (14) étant métallique, ladite patte de fixation (20) est une partie découpée du deuxième insert de renfort (14) pour former ladite ouverture (18).

4. Assemblage (10) selon l'une quelconque des revendications 1 à 3, **caractérisé en ce que** ladite patte de fixation (20) est en appui contre ladite paroi (13), du côté convexe du premier insert de renfort (12).

5. Assemblage (10) selon l'une quelconque des revendications 1 à 4, **caractérisé en ce que** le matériau polymère recouvrant au moins partiellement lesdits inserts de renfort (12, 14) ne recouvre pas lesdits orifices (13a, 13b ; 20a, 20b).

6. Assemblage (10) selon l'une quelconque des revendications 1 à 5, **caractérisé en ce que** le matériau polymère forme au moins une nervure de rigidification (24) s'étendant depuis une partie (18b) du bord de l'ouverture (18) le long de laquelle le premier insert de renfort (12) est en appui, dans le prolongement du premier insert de renfort (12), notamment dans la continuité d'une couche de polymère recouvrant le premier insert de renfort (12) à proximité de sa jonction avec le deuxième insert de renfort (14), au travers de l'ouverture (18) et au-delà de celle-ci.

7. Assemblage (10) selon l'une quelconque des revendications 1 à 6, **caractérisé en ce qu'**une ou plusieurs nervures de rigidification s'étendent parallèlement ou sensiblement parallèlement à la direction longitudinale du premier insert de renfort (12), à l'intérieur de la concavité définie par le deuxième insert de renfort, en regard de ladite ouverture, notamment d'un bord à l'autre de l'ouverture.

8. Face avant technique de véhicule automobile comprenant au moins un assemblage (10) selon l'une quelconque des revendications 1 à 7, dans laquelle le deuxième insert de renfort (14) forme une traverse horizontale, notamment inférieure, et le premier insert de renfort (12) forme un montant vertical.

9. Structure de support comprenant un assemblage (10) selon l'une quelconque des revendications 1 à 7 solidaire d'un élément de structure (30), dans lequel ledit élément de structure (30) est fixé audit assemblage (10) par des vis ou rivets (33, 34) traversant les orifices (13a, 13b ; 20a, 20b) de cet assemblage, l'élément de structure (30) étant notamment fixé à l'assemblage (10) du côté opposé à la patte de fixation (20) de celui-ci.

10. Procédé de fabrication d'un assemblage (10) comprenant au moins un premier insert de renfort longitudinal (12) et au moins un deuxième insert de renfort longitudinal (14), chaque insert de renfort (12, 14) présentant une section transversale ouverte concave, notamment sensiblement en forme de U ou Ω, ledit procédé comprenant :
(i) une étape de positionnement desdits inserts de renfort (12, 14) dans un moule, dans laquelle les inserts de renfort (12, 14) sont disposés de sorte que leurs directions longitudinales soient sensiblement perpendiculaires, et au cours de laquelle :
(a) un bord (16) d'une extrémité du premier insert de renfort (12) est appliqué contre le deuxième insert de renfort (14), notamment directement contre le deuxième insert de renfort (14), du côté convexe de celui-ci, le long d'une partie (18a-c) d'un bord d'une ouverture (18) traversant ledit deuxième insert de renfort (18), ladite ouverture (18) étant de forme et dimension identiques ou sensiblement identiques aux forme et dimension de la section transversale du premier insert de renfort (12), et
(b) une patte de fixation (20) solidaire dudit deuxième insert de renfort (12) et adjacente à ladite ouverture (18) est appliquée contre une paroi (13) de ladite extrémité du premier insert de renfort (12), de sorte que des orifices (13a, 13b ; 20a, 20b) traversant ladite paroi (13) et ladite patte de fixation (20) soient disposés en regard les uns des autres,
(ii) une étape d'injection d'un matériau polymère à l'intérieur du moule, au cours de laquelle un matériau polymère recouvre au moins partiellement lesdits inserts de renfort (12, 14) au moins au niveau de leur jonction.

## Patentansprüche

1. Anordnung (10) eines ersten Längsverstärkungseinsatzes (12) und eines zweiten Längsverstärkungseinsatzes (14) mittels eines Polymermaterials, das sie wenigstens teilweise bedeckt, wobei jeder Verstärkungseinsatz (10, 12) einen konkaven offenen Querschnitt aufweist, insbesondere im Wesentlichen in U- oder Ω-Form, wobei die Längsrichtungen dieser Verstärkungseinsätze (12, 14) im Wesentlichen zueinander senkrecht sind, **dadurch gekennzeichnet, dass**:
- ein Rand (16) eines Endes des ersten Verstärkungseinsatzes (12) an dem zweiten Verstärkungseinsatz (14) auf der konvexen Seite desselben anliegt, entlang eines Teils (18a-c) eines Randes einer Öffnung (18), die durch den zweiten Verstärkungseinsatz (14) hindurchgeht, wobei die Öffnung (18) eine Form und Abmessungen aufweist, die mit der Form und den Abmessungen des Querschnitts des Endes des ersten Verstärkungseinsatzes (12) identisch oder im Wesentlichen identisch sind,
- ein Polymermaterial die Verstärkungseinsätze (12, 14) wenigstens an ihrer Verbindungsstelle wenigstens teilweise bedeckt,
- eine Befestigungslasche (20), die mit dem zweiten Verstärkungseinsatz (14) fest verbunden ist und der Öffnung (18) benachbart ist, an einer Wand (13) des Endes des ersten Verstärkungseinsatzes (12) anliegt, wobei die Wand (13) und die Befestigungslasche (20) mit Löchern (13a, 13b; 20a, 20b) versehen sind, die einander gegenüberliegend angeordnet sind.

2. Anordnung (10) nach Anspruch 1, **dadurch gekennzeichnet, dass** die Befestigungslasche (20) stoffschlüssig mit dem zweiten Verstärkungseinsatz (14) verbunden ist oder durch Verschraubung, Schweißen, Nieten oder Kleben an dem zweiten Verstärkungseinsatz (14) befestigt ist.

3. Anordnung (10) nach Anspruch 1 oder 2, **dadurch gekennzeichnet, dass**, wenn der zweite Verstärkungseinsatz (14) metallisch ist, die Befestigungslasche (20) ein Teil ist, der aus dem zweiten Verstärkungseinsatz (14) ausgeschnitten wurde, um die Öffnung (18) zu bilden.

4. Anordnung (10) nach einem der Ansprüche 1 bis 3, **dadurch gekennzeichnet, dass** die Befestigungslasche (20) auf der konvexen Seite des ersten Verstärkungseinsatzes (12) an der Wand (13) anliegt.

5. Anordnung (10) nach einem der Ansprüche 1 bis 4, **dadurch gekennzeichnet, dass** das Polymermaterial, das die Verstärkungseinsätze (12, 14) wenigstens teilweise bedeckt, nicht die Löcher (13a, 13b; 20a, 20b) bedeckt.

6. Anordnung (10) nach einem der Ansprüche 1 bis 5, **dadurch gekennzeichnet, dass** das Polymermaterial wenigstens eine Versteifungsrippe (24) bildet, die sich von einem Teil (18b) des Randes der Öffnung (18) aus, entlang dessen der erste Verstärkungseinsatz (12) anliegt, in der Verlängerung des ersten Verstärkungseinsatzes (12), insbesondere als Fortsetzung einer Polymerschicht, die den ersten Verstärkungseinsatz (12) in der Nähe seiner Verbindungsstelle mit dem zweiten Verstärkungseinsatz (14) bedeckt, durch die Öffnung (18) hindurch und über diese hinaus erstreckt.

7. Anordnung (10) nach einem der Ansprüche 1 bis 6, **dadurch gekennzeichnet, dass** eine oder mehrere Versteifungsrippen sich parallel oder im Wesentlichen parallel zur Längsrichtung des ersten Verstärkungseinsatzes (12) im Inneren der durch den zweiten Verstärkungseinsatz definierten Hohlfläche gegenüber der Öffnung, insbesondere von einem Rand der Öffnung zum anderen, erstrecken.

8. Technische Vorderseite eines Kraftfahrzeugs, welche wenigstens eine Anordnung (10) nach einem der Ansprüche 1 bis 7 umfasst, wobei der zweite Verstärkungseinsatz (14) eine horizontale, insbesondere untere Querstrebe bildet und der erste Verstärkungseinsatz (12) eine vertikale Säule bildet.

9. Stützstruktur, welche eine Anordnung (10) nach einem der Ansprüche 1 bis 7 umfasst, die mit einem Strukturelement (30) fest verbunden ist, wobei das Strukturelement (30) an der Anordnung (10) durch Schrauben oder Niete (33, 34) befestigt ist, welche die Löcher (13a, 13b; 20a, 20b) dieser Anordnung durchqueren, wobei das Strukturelement (30) insbesondere an der Anordnung (10) auf der Seite befestigt ist, die der Befestigungslasche (20) derselben gegenüberliegt.

10. Verfahren zur Herstellung einer Anordnung (10), welche wenigstens einen ersten Längsverstärkungseinsatz (12) und wenigstens einen zweiten Längsverstärkungseinsatz (14) umfasst, wobei jeder Verstärkungseinsatz (12, 14) einen konkaven offenen Querschnitt aufweist, insbesondere im Wesentlichen in U- oder Ω-Form, wobei das Verfahren umfasst:
(i) einen Schritt der Positionierung der Verstärkungseinsätze (12, 14) in einer Form, in welchem die Verstärkungseinsätze (12, 14) derart angeordnet werden, dass ihre Längsrichtungen im Wesentlichen zueinander senkrecht sind, und in welchem:
(a) ein Rand (16) eines Endes des ersten Verstärkungseinsatzes (12) an den zweiten Verstärkungseinsatz (14), insbesondere direkt an den zweiten Verstärkungseinsatz (14), auf der konvexen Seite desselben angedrückt wird, entlang eines Teils (18a-c) eines Randes einer Öffnung (18), die durch den zweiten Verstärkungseinsatz (18) hindurchgeht, wobei die Öffnung (18) eine Form und Abmessungen aufweist, die mit der Form und den Abmessungen des Querschnitts des Endes des ersten Verstärkungseinsatzes (12) identisch oder im Wesentlichen identisch sind, und
(b) eine Befestigungslasche (20), die mit dem zweiten Verstärkungseinsatz (12) fest verbunden ist und der Öffnung (18) benachbart ist, an eine Wand (13) des Endes des ersten Verstärkungseinsatzes (12) angedrückt wird, derart, dass Löcher (13a, 13b; 20a, 20b), welche die Wand (13) und die Befestigungslasche (20) durchqueren, einander gegenüberliegend angeordnet sind,
(ii) einen Schritt der Einspritzung eines Polymermaterials ins Innere der Form, in welchem ein Polymermaterial die Verstärkungseinsätze (12, 14) wenigstens an ihrer Verbindungsstelle wenigstens teilweise bedeckt.

## Claims

1. Assembly (10) of a first longitudinal reinforcement insert (12) and a second longitudinal reinforcement insert (14) joined together by a polymer material at least partially covering them, each reinforcement insert (10, 12) having a concave open cross section, notably being substantially U- or Q-shaped, the longitudinal directions of said reinforcement inserts (12, 14) being substantially perpendicular, **characterized in that**:
- an edge (16) of one end of the first reinforcement insert (12) presses against the second reinforcement insert (14) on the convex side thereof, along a part (18a-c) of one edge of an opening (18) passing through said second reinforcement insert (14), said opening (18) having a shape and dimensions identical or substantially identical to the shape and dimensions of the cross section of said end of the first reinforcement insert (12),
- a polymer material at least partially covers said reinforcement inserts (12, 14) at least at their junction,
- a securing tab (20) integral with said second reinforcement insert (14) and adjacent to said opening (18) presses against a wall (13) of said end of the first reinforcement insert (12), said wall (13) and said securing tab (20) being pierced by orifices (13a, 13b; 20a, 20b) disposed in a manner facing one another.

2. Assembly (10) according to Claim 1, **characterized in that** said securing tab (20) is produced in one piece with said second reinforcement insert (14) or secured to the second reinforcement insert (14) by screwing, welding, riveting or adhesive bonding.

3. Assembly (10) according to Claim 1 or 2, **characterized in that**, with the second reinforcement insert (14) being made of metal, said securing tab (20) is a part cut out of the second reinforcement insert (14) so as to form said opening (18).

4. Assembly (10) according to any one of Claims 1 to 3, **characterized in that** said securing tab (20) presses against said wall (13) on the convex side of the first reinforcement insert (12).

5. Assembly (10) according to any one of Claims 1 to 4, **characterized in that** the polymer material at least partially covering said reinforcement inserts (12, 14) does not cover said orifices (13a, 13b; 20a, 20b).

6. Assembly (10) according to any one of Claims 1 to 5, **characterized in that** the polymer material forms at least one stiffening rib (24) that extends from a part (18b) of the edge of the opening (18) along which the first reinforcement insert (12) presses, in continuation of the first reinforcement insert (12), notably continuing a layer of polymer covering the first reinforcement insert (12) close to its junction with the second reinforcement insert (14), through the opening (18) and beyond the latter.

7. Assembly (10) according to any one of Claims 1 to 6, **characterized in that** one or more stiffening ribs extend parallel or substantially parallel to the longitudinal direction of the first reinforcement insert (12), inside the concavity defined by the second reinforcement insert, facing said opening, notably from one edge of the opening to the other.

8. Technical front end of a motor vehicle, comprising at least one assembly (10) according to any one of Claims 1 to 7, wherein the second reinforcement insert (14) forms a horizontal, notably lower, cross member and the first reinforcement insert (12) forms a vertical upright.

9. Support structure comprising an assembly (10) according to any one of Claims 1 to 7 that is integral with a structural element (30), wherein said structural element (30) is secured to said assembly (10) by screws or rivets (33, 34) passing through the orifices (13a, 13b; 20a, 20b) in this assembly, the structural element (30) notably being secured to the assembly (10) on the opposite side from the securing tab (20) thereof.

10. Method for manufacturing an assembly (10) comprising at least one first longitudinal reinforcement insert (12) and at least one second longitudinal reinforcement insert (14), each reinforcement insert (12, 14) having a concave open cross section, notably being substantially U- or Q-shaped, said method comprising:
(i) a step of positioning said reinforcement inserts (12, 14) in a mold, wherein the reinforcement inserts (12, 14) are disposed such that their longitudinal directions are substantially perpendicular, and during which:
(a) an edge (16) of one end of the first reinforcement insert (12) is pressed against the second reinforcement insert (14), notably directly against the second reinforcement insert (14), on the convex side thereof, along a part (18a-c) of one edge of an opening (18) passing through said second reinforcement insert (18), said opening (18) having a shape and dimensions identical or substantially identical to the shape and dimensions of the cross section of the first reinforcement insert (12), and
(b) a securing tab (20) integral with said second reinforcement insert (12) and adjacent to said opening (18) is pressed against a wall (13) of said end of the first reinforcement insert (12), such that orifices (13a, 13b; 20a, 20b) passing through said wall (13) and said securing tab (20) are disposed in a manner facing one another,
(ii) a step of injecting a polymer material into the mold, during which a polymer material at least partially covers said reinforcement inserts (12, 14) at least at their junction.
